# FASCICULE DE BREVET EUROPEEN

(11) **EP 4 044 808 B1**
(45) Date de publication et mention de la délivrance du brevet: **24.06.2026**
(21) Numéro de dépôt: 20803219.3
(22) Date de dépôt: 16.10.2020
(51) Int. Cl.: A01N 31/02, A01N 65/03, A01P 5/00

(54) **COMPOSITIONS NEMATOSTATIQUES ET LEUR UTILISATION EN AGRICULTURE**
NEMATOSTATISCHE ZUSAMMENSETZUNGEN UND DEREN VERWENDUNG IN DER LANDWIRTSCHAFT.
NEMATOSTATIC COMPOSITIONS AND THEIR USE IN AGRICULTURE

(30) Priorité: 16.10.2019 FR 1911537
(43) Date de publication de la demande: 24.08.2022
(73) Titulaire: Agro Innovation International, 35400 Saint-Malo (FR)
(72) Inventeur: YVIN, Jean-Claude, 35400 Saint-Malo (FR); CRUZ, Florence, 35400 Saint-Malo (FR)
(74) Mandataire: Cabinet Beau de Loménie
(86) Numéro de dépôt international: PCT/FR2020/051858
(87) Numéro de publication internationale: WO 2021/074546

(56) Documents cités:
- WO-A1-2014/147199
- WO-A1-2019/095002
- WO-A2-2010/096358
- CN-A- 106 173 288
- "The Lifting Eye Serum", GNPD, MINTEL, 1 February 2016 (2016-02-01), XP002768945

## Description

### Domaine Technique

L'invention concerne une composition nématostatique comprenant une algue marine ou un extrait d'algue marine et un acide carboxylique pouvant notamment être utilisés dans l'agriculture pour lutter contre les attaques de nématodes.

### Technique antérieure

Les nématodes sont des animaux vermiformes, le plus souvent microscopiques. Ils se trouvent dans pratiquement tous les milieux, à la fois sous forme de parasites ou d'organismes libres. Les nématodes phyto-parasites sont capables d'occasionner des dégâts significatifs aux plantes cultivées et sont extrêmement répandus.

Parce qu'ils sont difficiles ou impossibles à observer au champ, et parce que leurs symptômes sont le plus généralement non spécifiques, les dommages que les nématodes infligent aux cultures sont le plus souvent attribués à d'autres causes plus visibles. Agriculteurs et chercheurs souvent sous-estiment leurs effets. Cependant, il est globalement reconnu que les nématodes phytoparasites réduisent la production agricole mondiale d'approximativement 11%, soit une perte de récolte de plusieurs millions de tonnes chaque année, correspondant à un coût économique estimé à l'échelle mondiale à 100 milliards de dollars par an.

Les nématodes ont une répartition mondiale et sont présents dans les couches superficielles du sol. Ils sont adaptés à tout type de milieu : eau salée, eau douce, des régions polaires aux régions tropicales. Ils constituent le groupe animal le plus nombreux et le plus répandu dans le sol. Leurs larves peuvent rester vivantes des dizaines d'années sous forme de kystes.

Les moyens de lutte contre ces phytopathogènes sont multiples mais parfois difficiles à mettre en place ou partiellement efficaces. Outre les nématicides chimiques ou la biofumigation, les techniques de traitement physique (solarisation) et le respect de pratiques agricoles, de nouvelles méthodes de lutte peuvent être : l'apport au sol d'organismes biologiques prédateurs naturels des nématodes, l'amélioration génétique des plantes pour les rendre résistantes à ces pathogènes ou la stimulation naturelle des défenses des plantes par des éliciteurs.

Les produits de fumigation sont les moyens traditionnels de contrôle des nématodes notamment en USA, France, Japon, Italie et Espagne et représentent 45% des ventes de nématicides. Cependant, ils sont onéreux et limités de ce fait aux cultures de haute valeur.

Les nématicides chimiques ont représenté en 2011, 55% des ventes totales et sont les plus utilisés au Brésil, UK, Mexique, Afrique du Sud, Chine et Argentine.

En Europe, les cultures les plus concernées par l'infection par les nématodes sont les grandes cultures (betteraves, maïs, blé dur et colza), les cultures légumières (carotte, pomme de terre, solanacées, cucurbitacées, laitues) et les cultures pérennes telle que la vigne.

Pour des raisons environnementales et sanitaires, la quasi-totalité des nématicides les plus efficaces sont/seront retirés du marché, laissant les filières avec peu de solutions.

Dans ce contexte de réduction de l'utilisation des pesticides et celui de l'émergence de nématodes dits « virulents » et capables de contourner les résistances actuelles des plantes, la recherche de méthodes alternatives s'avère donc indispensable.

WO2010096358 décrit une composition pesticide comprenant un ingrédient actif comprenant au moins de l'acide formique ou de l'acide acétique, un composé acide qui potentialise l'activité de l'ingrédient actif et un support pesticide approprié.

### Résumé de l'invention

Ainsi, la présente invention, qui trouve application dans le domaine agro-écologique et agricole, vise à proposer une nouvelle composition nématostatique pour lutter contre les attaques de nématodes.

Selon un premier aspect, l'invention concerne une composition nématostatique comprenant (i) une algue marine sous forme de poudre et (ii) de l'acide formique ;
dans laquelle l'algue marine sous forme de poudre est obtenue en séchant l'algue marine puis en la broyant jusqu'à obtenir une poudre ; et
dans laquelle l'algue marine est Ascophyllum nodosum.

Selon un deuxième aspect, l'invention concerne l'utilisation d'une composition selon l'invention comme composition nématostatique vis-à-vis des nématodes.

Selon un troisième aspect, l'invention concerne un procédé de traitement d'un sol destiné à favoriser la croissance d'une plante en réduisant l'accès des nématodes aux racines de ladite plante, caractérisé en ce qu'il comprend l'apport au sol d'une quantité efficace d'une composition selon l'invention.

### Description détaillée

### Définitions

Le terme « composition nématostatique » désigne une composition qui perturbe la reconnaissance de sa plante-hôte par un nématode, qui bloque le développement de l'œuf ou de la larve de nématode et / ou qui paralyse le nématode temporairement.

Le terme « algue marine » désigne une plante thallophyte vivant en milieu aquatique, et plus précisément dans les mers et océans, pouvant être utilisée dans l'agriculture, l'alimentation et l'industrie en général. Dans le cadre de la présente description, l'algue marine peut être une algue brune, une algue verte, une algue rouge, de préférence une algue brune. Des exemples d'algue brune sont : *Ascophyllum nodosum, Fucus serratus, Fucus vesiculosus, Laminaria hyperborea, Laminaria saccharina, Laminaria digitata, Laminaria japónica, Ecklonia máxima, Macrocystis pyrifera , Himanthalia elongata* et *Sargassum spp.* Dans le cadre de la présente invention, l'algue marine est *Ascophyllum nodosum.*

Le terme « extrait » désigne le produit résultant d'une extraction à partir d'une source. Par exemple, la source peut être une source biologique, comme des cellules. Lorsqu'il s'agit de cellules, le terme « extrait » désigne donc le produit résultant de l'extraction du contenu de cellules. Ainsi, par exemple, le terme « extrait d'algue marine » désigne le produit résultant de l'extraction du contenu des cellules d'une algue marine. L'extraction pouvant être effectuée avec un solvant aqueux ou un solvant organique.

Le terme « acide carboxylique » doit être compris dans son sens commun, c'est-à-dire un acide de formule R-COOH, où R est un hydrogène ou un groupe organique, avantageusement R est un hydrogène ou un groupe organique comprenant entre 1 et 10 atomes de carbones. Dans le cadre de la présente description, l'acide carboxylique peut être choisi parmi l'acide méthanoïque, l'acide éthanoïque, l'acide acétique, l'acide propanoïque, l'acide butanoïque, l'acide pentanoïque, l'acide hexanoïque, l'acide heptanoïque, l'acide octanoïque, l'acide nonanoïque, l'acide décanoïque, l'acide benzoïque, l'acide 2-hydroxybenzoïque, l'acide 2-mercaptopropanoïque. Des exemples d'acide carboxylique sont : l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique. Dans le cadre de la présente invention, l'acide carboxylique est l'acide formique.

Le terme « fertilisant » désigne une substance, ou un mélange de substances, naturelle ou d'origine synthétique, utilisée en agriculture, en horticulture et sylviculture, pour améliorer les sols, notamment leur structure, et fertiliser les plantes cultivées. Les fertilisants comprennent les engrais et les amendements.

Le terme « engrais » désigne des matières fertilisantes dont la fonction principale est d'apporter aux plantes des éléments directement utiles à leur nutrition (éléments fertilisants majeurs, éléments fertilisants secondaires et oligo-éléments).

Le terme « amendement » désigne une substance destinée à améliorer la qualité des sols, et notamment destinée à améliorer le pH des sols. Avantageusement, l'amendement est choisi parmi les amendements minéraux basiques de type calcaire et/ou calcaires et magnésiens ; les amendements humifères de type composts ou les fumiers.

Par l'expression « plante » on entend désigner dans la présente demande la plante considérée dans son ensemble, incluant son appareil racinaire, son appareil végétatif, les graines, semences et fruits.

La présente invention découle des avantages surprenants mis en évidence par les inventeurs de l'effet d'une composition comprenant une algue marine ou un extrait d'algue marine et d'un acide organique sur les nématodes.

### Composition

L'invention concerne une composition nématostatique comprenant (i) une algue marine sous forme de poudre et (ii) de l'acide formique ;
dans laquelle l'algue marine sous forme de poudre est obtenue en séchant l'algue marine puis en la broyant jusqu'à obtenir une poudre ; et
dans laquelle l'algue marine est Ascophyllum nodosum.

L'algue marine peut être facilement récoltée selon les méthodes classiques décrites dans la littérature. Dans le cadre de la présente invention, l'algue marine est séchée pour éliminer l'eau afin d'obtenir une algue sèche, c'est-à-dire une algue contenant moins de 5% d'eau, de préférence moins de 3% d'eau, par rapport à la masse totale d'algue. Le séchage permet d'obtenir une algue marine sous forme sèche. L'algue marine est ensuite broyée.

Les extraits d'algues marines, qui ne sont pas selon l'invention, peuvent être obtenus par un procédé comportant les étapes suivantes : mélange des algues fraiches ou sèches, de préférence broyées, avec de l'eau, extraction (séparation solide-liquide) et éventuellement fractionnement et/ou concentration.

L'extrait d'algue marine, qui n'est pas selon l'invention, peut être un macérât de macroalgues. L'extrait d'algue marine peut être obtenu par macération aqueuse en mélangeant des algues préalablement séchées (algues sèches) avec de l'eau à une température et une durée appropriées. Par exemple, les algues marines sèches sont mélangées avec de l'eau à température ambiante pendant 3 heures, le mélange est ensuite centrifugé pour en récupérer la fraction liquide. La fraction liquide peut être utilisée en tant que telle comme extrait d'algue marine ou peut subir un ou plusieurs traitements ultérieurs, comme par exemple une filtration et/ou une précipitation. L'extrait d'algue marine peut être séché pour en éliminer l'eau afin d'obtenir un extrait sec, c'est-à-dire un extrait contenant moins de 5% d'eau, de préférence moins de 3% d'eau, par rapport à la masse totale de l'extrait. Le séchage permet d'obtenir un extrait d'algue marine sous forme sèche.

Dans le cadre de l'invention, l'algue marine est sous forme de poudre obtenue en séchant l'algue marine puis en la broyant jusqu'à obtenir une poudre.

Avantageusement, la taille de particules de la poudre d'algue (selon l'invention) ou de l'extrait d'algue (qui n'est pas selon l'invention) se caractérise par les paramètres suivants :
- une distribution en volume dv50 inférieure à 100 µm, de préférence inférieure à 90 µm, 80 µm, 70 µm, 60 µm, par exemple allant de 30 à 100 µm, de préférence allant de 30 à 80 µm, de 50 à 60 µm, de préférence d'environ 55 µm et / ou
- une distribution en volume dv90 inférieure à 315 µm, de préférence inférieure à 250 µm, inférieure à 200 µm, par exemple allant de 100 à 315 µm, de préférence allant de 150 à 200 µm, de préférence d'environ 180 µm.

Dans le cadre de la présente invention, l'acide carboxylique tel que décrit ci-après est l'acide formique. L'acide carboxylique peut être obtenu par synthèse chimique ou par fermentation selon des méthodes bien décrites dans la littérature.

Avantageusement, l'acide carboxylique est sous forme d'un sel, de préférence il se présente sous forme de poudre. Le sel d'acide carboxylique compris dans la composition selon l'invention peut être choisi parmi un sel de métal alcalin, tel que le sodium, le potassium ou le lithium ; un sel de métal alcalino-terreux, tel que le calcium ou le magnésium ; un sel d'un métal de transition, tel que le manganèse, le cuivre, le zinc ou le fer ; un sel d'ammonium ; un sel de phosphonium ou un sel de sulfonium. De préférence, le sel est choisi parmi un sel d'ammonium, un sel de potassium, un sel de calcium et un sel de sodium. Par exemple, le sel d'acide formique peut être choisi parmi le formiate de calcium, le formiate de sodium, le formiate de potassium ou le formiate d'ammonium. L'acide carboxylique sous forme de sel est particulièrement avantageux car il permet d'obtenir aisément une poudre pouvant être granulée facilement.

L'acide carboxylique est avantageusement sous forme sèche, de préférence sous forme de poudre.

Avantageusement, la taille de particules de la poudre d'acide carboxylique se caractérise par les paramètres suivants :
- une distribution en volume dv50 inférieure à 100 µm, de préférence inférieure à 90 µm, 80 µm, 70 µm, 60 µm, par exemple allant de 30 à 100 µm, de préférence allant de 30 à 80 µm, de 50 à 60 µm, de préférence d'environ 55 µm et / ou
- une distribution en volume dv90 inférieure à 315 µm, de préférence inférieure à 250 µm, inférieure à 200 µm, par exemple allant de 100 à 315 µm, de préférence allant de 150 à 200, de préférence d'environ 180 µm.

La composition selon l'invention peut se présenter sous forme de poudre homogène comprenant une algue marine sous forme de poudre ou un extrait d'algue marine sous forme de poudre et un acide carboxylique sous forme de poudre.

Lorsque l'algue marine ou l'extrait d'algue marine et l'acide carboxylique sont sous forme de poudre, ils peuvent être mélangés de façon homogène. La granulométrie de chacune des poudres est adaptée pour pouvoir les mélanger et obtenir un mélange de poudres homogène. Avantageusement, la granulométrie de l'algue marine ou l'extrait d'algue marine et l'acide carboxylique sont équivalentes pour pouvoir obtenir une poudre homogène.

Dans un mode de réalisation particulier, la composition comprend en outre au moins un fertilisant. De telles compositions permettent de répondre au mieux aux besoins de croissance de la plante qui s'exprimera notamment en termes d'amélioration du développement de la plante et du rendement.

A titre d'exemples de fertilisants pouvant être utilisés dans la composition selon l'invention, on citera les amendements calcaires, les amendements organiques et les supports de culture, les engrais racinaires de type NP, PK, NPK, etc. ou encore les solutions nutritives racinaires.

Dans un mode de réalisation particulier, l'engrais est une ou un mélange de plusieurs substances choisies parmi l'urée, le sulfate d'ammonium, le nitrate d'ammonium, le phosphate, les sels de phosphate, le chlorure de potassium, le nitrate de magnésium, le nitrate de manganèse, le nitrate de zinc, le nitrate de cuivre, l'acide phosphorique, le nitrate de potassium, le sulfate de potassium, le sulfate de calcium, le chlorure de calcium et l'acide borique.

Le fertilisant peut être sous forme solide, de préférence sous forme de granulés ou sous forme de poudre.

Lorsque le fertilisant est sous forme de granulés, il peut être associé (i) à une algue marine sous forme de poudre ou un extrait d'algue marine sous forme de poudre et un acide carboxylique sous forme de poudre ou (ii) à des granulés obtenus à partir d'une poudre homogène d'algue marine ou d'un extrait d'algue marine et d'un acide carboxylique.

Lorsque le fertilisant est sous forme de poudre, la taille de particules de la poudre de fertilisant peut se caractériser par les paramètres suivants :
- une distribution en volume dv50 inférieure à 100 µm, de préférence inférieure à 90 µm, 80 µm, 70 µm, 60 µm, par exemple allant de 30 à 100 µm, de préférence allant de 30 à 80 µm, de 50 à 60 µm, de préférence d'environ 55 µm et / ou
- une distribution en volume dv90 inférieure à 315 µm, de préférence inférieure à 250 µm, inférieure à 200 µm, par exemple allant de 100 à 315 µm , de préférence allant de 150 à 200, de préférence d'environ 180 µm.

Lorsque la composition comprend une algue marine sous forme de poudre ou un extrait d'algue marine sous forme de poudre, un acide carboxylique sous forme de poudre et un fertilisant sous forme de poudre, ils peuvent être facilement mélangés afin d'obtenir une poudre homogène. Ainsi, la granulométrie de chacune des poudres est adaptée pour pouvoir les mélanger et obtenir un mélange de poudres homogène. Avantageusement, la granulométrie de l'algue marine ou l'extrait d'algue marine, de l'acide carboxylique et du fertilisant sont équivalentes pour pouvoir obtenir une poudre homogène.

Dans un mode de réalisation particulier, lorsque la composition comprend une algue marine ou un extrait d'algue marine, un acide carboxylique et un fertilisant, par exemple un engrais, la teneur en algue marine ou en extrait d'algue marine et en acide carboxylique est comprise entre 1% et 10%, par exemple entre 1% et 5%, par exemple 1,5%, en masse par rapport à la masse totale de la composition.

Un exemple de composition selon l'invention comprend :
- entre 20% et 30%, par exemple 25%, en masse d'urée par rapport à la masse totale de la composition,
- entre 10% et 25%, par exemple 17%, en masse de sulfate d'ammonium par rapport à la masse totale de la composition,
- entre 25% et 35%, par exemple 30%, en masse d'une source de P₂O₅, par exemple de TSP (Triple superphosphate), par rapport à la masse totale de la composition
- entre 10% et 20%, par exemple 16%, en masse d'une source de K₂O, par exemple de chlorure de potassium par rapport à la masse totale de la composition,
- entre 1% et 10%, par exemple 1,5%, en masse d'un mélange de formiate de calcium et d'extrait d'algue par rapport à la masse totale de la composition,
- entre 5% et 15%, par exemple 9,5%, en masse de carbonate de calcium par rapport à la masse totale de la composition, et
- entre 0.2% et 1%, par exemple 0,5%, en masse d'adjuvant de granulation par rapport à la masse totale de la composition.

La composition selon l'invention peut se présenter sous forme de granulés. Les granulés peuvent être obtenus par les méthodes décrites dans la littérature, par exemple par compression, prilling, granulation par voie sèche ou par voie humide. La taille des granulés est généralement de l'ordre de 1 à 5 mm.

Dans un mode de réalisation particulièrement préféré, la teneur en acide carboxylique va de 30 à 90% en poids et la teneur en algue ou en extrait d'algue va de 10 à 70% en poids, rapporté au poids total de la composition.

Un exemple de composition selon l'invention comprend 35% en poids d'acide carboxylique et 50% en poids d'algue marine ou d'extrait d'algue marine, rapporté au poids total de la composition. Dans cet exemple, lorsque l'acide carboxylique est le formiate de calcium, ladite composition comprend 50% en poids de formiate de calcium, rapporté au poids total de la composition (sachant que le formiate de calcium comprend 70% en poids d'acide formique et 30% en poids de calcium).

Un autre exemple de composition selon l'invention comprend 50% en poids d'acide carboxylique et 30% en poids d'algue marine ou d'extrait d'algue marine, rapporté au poids total de la composition. Dans cet exemple, lorsque l'acide carboxylique est le formiate de calcium, ladite composition comprend 70% en poids de formiate de calcium, rapporté au poids total de la composition (sachant que le formiate de calcium comprend 70% en poids d'acide formique et 30% en poids de calcium).

La composition nématostatique selon l'invention permet de protéger la plante contre les nématodes. Cette protection permet d'améliorer la santé de la plante, répondant ainsi aux besoins de croissance de la culture qui s'exprimera notamment en termes d'amélioration de rendement et de la qualité de la récolte. La composition selon l'invention permet également de limiter, jusqu'à supprimer, l'utilisation de pesticides.

### Utilisation et procédé

L'invention concerne également l'utilisation d'une composition selon l'invention comme composition nématostatique vis-à-vis des nématodes, ainsi qu'un procédé de traitement d'un sol destiné à favoriser la croissance d'une plante en réduisant l'accès des nématodes aux racines de ladite plante, caractérisé en ce qu'il comprend l'apport au sol d'une quantité efficace d'une composition selon l'invention.

Par « quantité efficace » on entend une quantité suffisante pour avoir un effet nématostatique d'au moins 10%, avantageusement d'au moins 20%, par exemple d'au moins 30%, d'au moins 50% ou d'au moins 70%. L'effet nématostatique peut être mesuré avec l'indice de galles. Ainsi, dans le cadre de la présente invention, une « quantité efficace » permet de diminuer l'indice de galles d'au moins 10%, avantageusement d'au moins 20%, par exemple d'au moins 30%, d'au moins 50% ou d'au moins 70%.

Ainsi, dans un mode de réalisation particulier, la composition selon l'invention est apportée au sol dans une quantité suffisante pour avoir un effet nématostatique d'au moins 10%, avantageusement d'au moins 20%, par exemple d'au moins 30%, au moins 50% ou au moins 70% ; par exemple pour diminuer l'indice de galles d'au moins 10%, avantageusement d'au moins 20%, par exemple d'au moins 30%, d'au moins 50% ou d'au moins 70%.

Avantageusement, la composition est apportée au sol au stade semis, pré-émergence de la plante ou post-émergence de la plante.

La composition selon l'invention peut être apportée au sol en des quantités variables selon les besoins de la plante traitée, par exemple en une quantité allant de 1 à 50 kg/ha, de préférence allant de 2 à 30 kg/ha, de préférence environ 10 kg/ha.

La présente invention trouve application dans le traitement d'une très grande variété de plantes.

Parmi les plantes traitées, on citera en particulier :
(i) les dicotylédones telles que les Solanacées (ex. tabac, tomates, pommes de terre, aubergines, etc...), les chenopodiacées (ex. betteraves à sucre, etc...), les fabacées (ex. soja, pois, luzerne etc...), les cucurbitacées (ex. melon, pastèque, concombre, courges, etc...), les crucifères ou brassicacées (ex. colza, moutarde, etc...), les composées (ex. chicorée, etc...), les Ombellifères (ex. carottes, cumin etc...), les malvacées (ex. cotonnier, caco, okra, etc...), les lamiacées (lavande, etc.) et les rosacées en particulier arbres et arbustes dont les fruits ont une importance économique ; et
(ii) (ii) les monocotylédones telles que par exemple les céréales (ex. blé, orge, avoine, riz, maïs etc...) et les Liliacées (ex. oignon, ail, etc...).

Avantageusement, la plante appartient à l'ordre des monocotylédones, telle que la famille des poacées. Les poacées, communément appelés les graminées, renferment notamment la plupart des espèces appelées communément « herbes » et « céréales ». Les céréales sont largement cultivées, principalement pour leurs grains, et sont utilisées dans l'alimentation humaine et animale.

Lorsque la plante est une poacée, elle est de préférence choisie parmi le blé, le riz, l'orge, l'avoine, le seigle, la canne à sucre, la prairie ou le maïs, de préférence le blé.

La plante est de préférence choisie parmi le soja, la betterave, le maïs, le blé dur, le colza, la carotte, la pomme de terre, les solanacées, les cucurbitacées, la laitue ou la vigne.

Les nématodes traités selon l'utilisation ou le procédé de l'invention sont de préférence des nématodes pathogènes, par exemple choisis parmi les genres *Achlysiella, Anguina, Aphasmatylenchus, Aphelenchoides, Belonolaimus, Bursaphelenchus, Criconemella, Ditylenchus, Helicotylenchus, Hemicriconemoides, Heterodera, Hirschmanniella, Hoplolaimus, Longidorus, Meloidogyne, Nacobbus, Paralongidorus, Pratylenchus, Radopholus, Rotylenchulus, Rotylenchus, Scutellonema, Trichodorus, Trophotylenchulus, Ty*/*enchorhynchus, Tylenchulus et Xiphinema.*

### Brève description des dessins

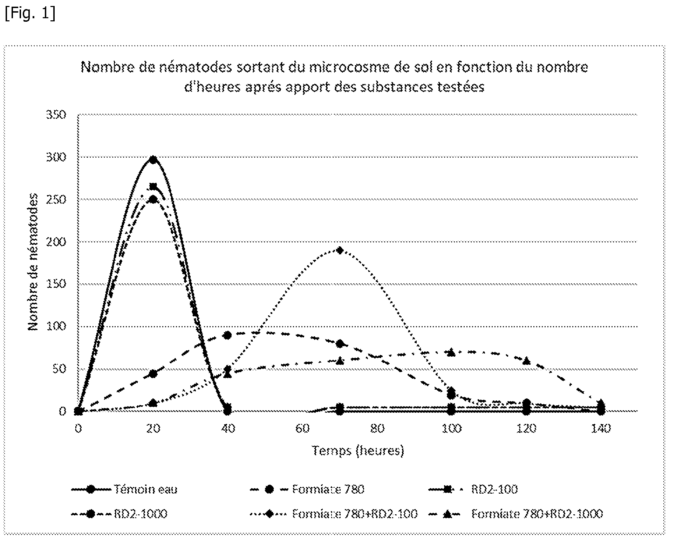

[Fig. 1] représente le nombre de nématodes migrant du sol vers l'eau au travers du tamis en fonction du temps après contact avec les produits testés. Cette figure illustre donc la mobilité des nématodes traités ou non traités avec une composition selon l'invention.

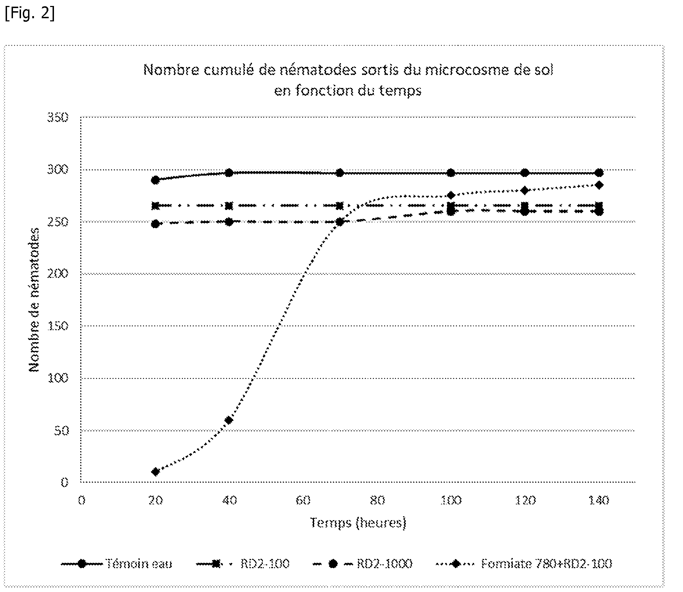

[Fig. 2] représente le nombre cumulé de nématodes migrant du sol vers l'eau au travers du tamis en fonction du temps. Cette figure illustre donc la mobilité des nématodes traités ou non traités avec une composition selon l'invention.

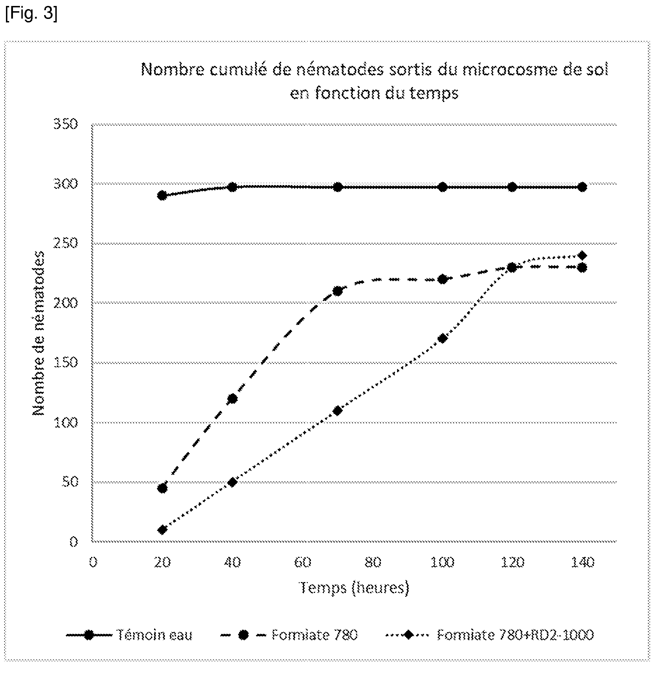

[Fig. 3] représente le nombre cumulé de nématodes migrant du sol vers l'eau au travers du tamis en fonction du temps. Cette figure illustre donc la mobilité des nématodes traités ou non traités avec une composition selon l'invention.

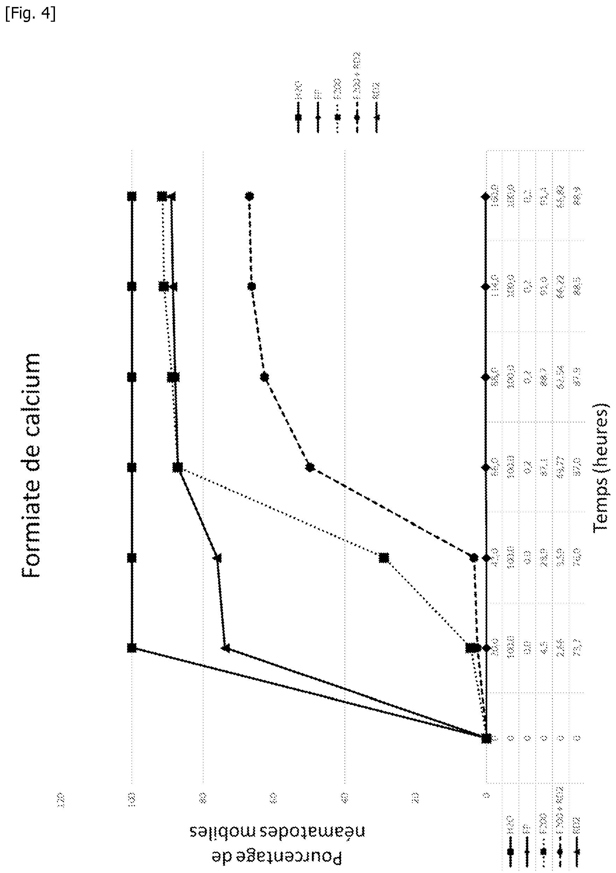

[Fig. 4] représente le pourcentage de nématodes mobiles migrant du sol vers l'eau au travers du tamis en fonction du temps, les nématodes étant mis en contact avec du formiate de calcium (F200), un extrait d'algue (RD2), un mélange F200 + RD2, de l'eau (H2O, témoin négatif) ou du fluopyram (FP, témoin positif).

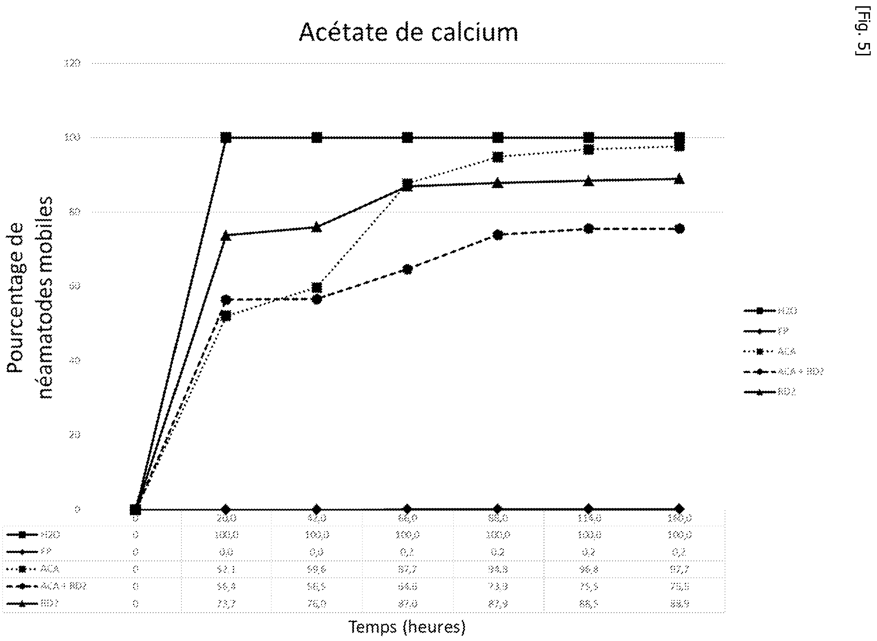

[Fig. 5] représente le pourcentage de nématodes mobiles migrant du sol vers l'eau au travers du tamis en fonction du temps, les nématodes étant mis en contact avec de l'acétate de calcium (ACA), un extrait d'algue (RD2), un mélange ACA + RD2, de l'eau (H2O, témoin négatif) ou du fluopyram (FP, témoin positif).

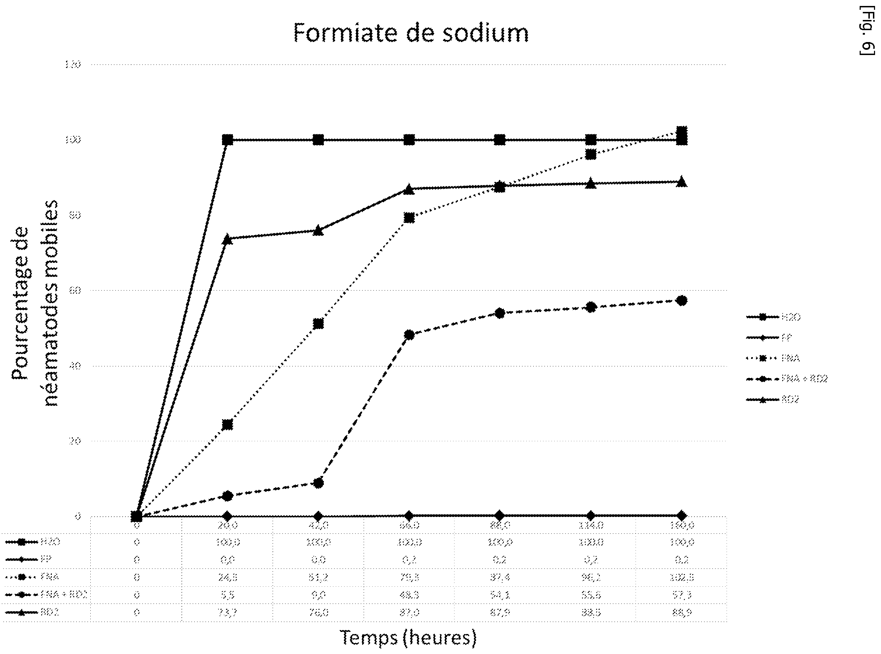

[Fig. 6] représente le pourcentage de nématodes mobiles migrant du sol vers l'eau au travers du tamis en fonction du temps, les nématodes étant mis en contact avec du formiate de sodium (FNA), un extrait d'algue (RD2), un mélange FNA + RD2, de l'eau (H2O, témoin négatif) ou du fluopyram (FP, témoin positif).

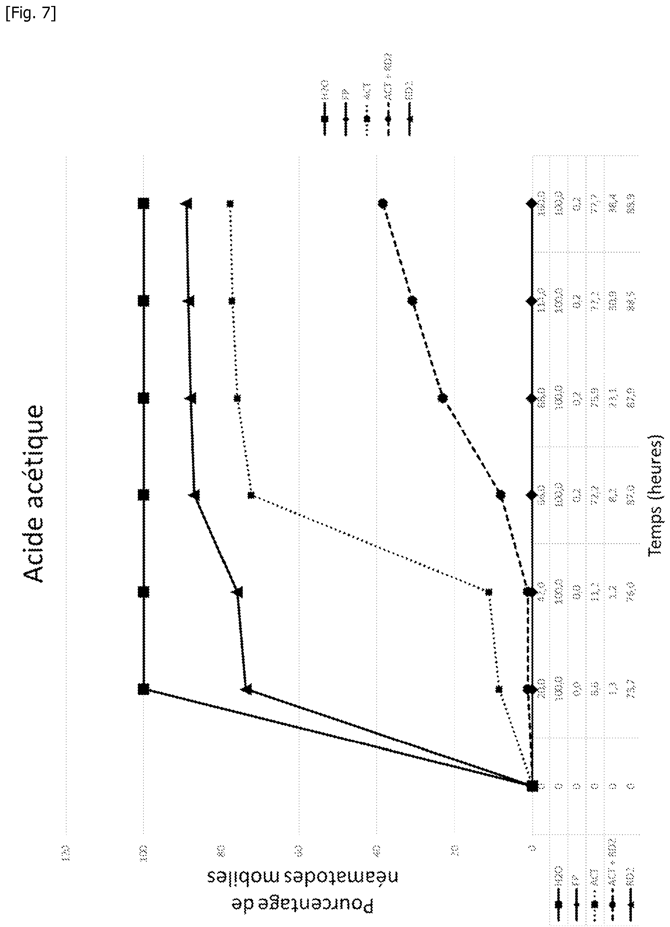

[Fig. 7] représente le pourcentage de nématodes mobiles migrant du sol vers l'eau au travers du tamis en fonction du temps, les nématodes étant mis en contact avec de l'acide acétique (ACT), un extrait d'algue (RD2), un mélange ACT + RD2, de l'eau (H2O, témoin négatif) ou du fluopyram (FP, témoin positif).

### Exemples

### Exemple 1 : effet nématostatique in vitro

### Méthode permettant de tester la mobilité de Meloidogyne javanica en microcosme de sol

Des nématodes juvéniles de *M. javanica* ont été déposés à la surface d'une colonne de sol stérile de 2 cm d'épaisseur reposant sur un tamis (ouate), 1 heure avant l'ajout des produits à tester afin de leur laisser le temps de se déplacer dans la porosité du sol. Selon leur mobilité, les nématodes vont se répartir de manière aléatoire dans la couche de sol. Après ajout des produits à tester et incubation de 6 h, la colonne de sol avec le tamis ont été placés dans un tube contenant de l'eau. Les nématodes mobiles traversent la colonne de sol et migrent naturellement dans l'eau. Les nématodes qui passent dans l'eau peuvent être dénombrés.

Si la concentration considérée en produit à tester est inhibitrice pour la mobilité des nématodes en présence de sol, les nématodes sont maintenus dans la colonne de sol et retardés dans leur migration dans l'eau. Le temps de sortie des nématodes de la colonne de sol est d'autant plus long que la concentration en produit nématostatique est élevé.

La concentration de produit à tester est considérée comme inhibitrice lorsque le nombre de nématodes mobiles en présence du produit à tester est significativement inférieur au nombre de nématodes mobiles en présence d'eau (contrôle négatif).

### Conditions expérimentales

1) *Modalités* :
   - dans les exemples ci-après « ppm » correspond à « mg/kg de sol »
   - Sel d'acide carboxylique (formiate de calcium) à la concentration dans le sol exprimée en mg/kg de sol: 780 mg/kg de sol (ou ppm), composition qui n'est pas selon l'invention.
   - Poudre d'algues RD2 (*Ascophyllum nodosum*) aux concentrations dans le sol exprimées en mg/kg de sol : 100 mg/kg de sol ou 1000 mg/kg de sol, composition qui n'est pas selon l'invention.
   - Composition de sel d'acide carboxylique (formiate de calcium) à 780 mg/kg de sol + poudre d'algues RD2 (*Ascophyllum nodosum*) à 100 mg/kg de sol.
   - Composition de sel d'acide carboxylique (formiate de calcium) à 780 mg/kg de sol + poudre d'algues RD2 (*Ascophyllum nodosum*) à 1000 mg/kg de sol.
   - Témoin négatif H₂O.
2) *Nombre de répétition*/*modalité* : 4 répétitions.
3) *Nématodes* : 297 nématodes ± 60 /microcosme (i.e. sol + nématodes + produit testé)
4) *Conditions* :
   - Température ambiante (22°C).
   - Le sol qui a été utilisé est un sol de texture sableuse (79 % sable; 14,1 % limons ; 6,9 % argile), avec un pH de 7,8 et un taux de matière organique de 29,2 g/kg. Le sol a été stérilisé par autoclavage (60 min à 105°C) avant d'être utilisé.
   - Quantité de sol : 4,04 g +/-0,03 g de sol par microcosme.
   - Hauteur de colonne de sol : 2 cm.
   - Humidité du sol 22 % +/-0,6%.
   - Dépôt des nématodes 1 h avant le dépôt du produit à tester.
   - Durée d'incubation avec le produit à tester : 6h.
   - Passage actif sur eau pour tester la réversibilité de l'effet sur 6 jours (cinétique sur 144h).

### Résultats

Les résultats sont présentés aux Figures 1 et 2.

En présence d'eau et de la poudre d'algues seule (RD2) aux doses 100 ppm et 1000 ppm dans les conditions expérimentales testées, 97 à 99% des nématodes sont sortis du microcosme du sol dans les 20 premières heures.

En présence de 780 ppm de formiate de calcium seul :
- 14% des nématodes n'ont pas été affectés dans leur mobilité,
- 62% des nématodes ont été affectés de manière réversible dans leur mobilité. Les juvéniles de *M. javanica* ont mis entre 2 et 3 jours à sortir du microcosme de sol, et
- 24 % des nématodes ont été affectés de manière non réversible à 6 jours.

En présence de 780 ppm de formiate de calcium et de poudre d'algues RD2:
- 3 à 4% des nématodes n'ont pas été affectés dans leur mobilité,
- 77 à 93% des nématodes ont été affectés de manière réversible dans leur mobilité. Les juvéniles de *M. javanica* mettent entre 2 à 4 jours (RD2 100 ppm) et entre 2 à 5 jours (RD2 1000 ppm) à sortir du microcosme de sol, et
- 20% des nématodes ont été affectés de manière non réversible à 6 jours pour l'association (formiate de calcium + RD2).

A 3 jours, 92 % des nématodes qui ont été mis en présence de formiate de calcium 780 ppm seuls sont sortis du microcosme, contre 46 % des nématodes qui ont été mis en présence de formiate de calcium 780 ppm + RD2-1000 ppm. Il faut attendre 5 jours pour que 96 % des nématodes qui ont été mis en présence de formiate de calcium 780 ppm + RD2-1000 ppm sortent du microcosme.

La poudre d'algues RD2 utilisée seule n'a pas affecté la mobilité des nématodes dans le sol. Par contre, plus de 54% des nématodes ont eu une mobilité réduite et pendant une période plus longue lorsque le formiate de calcium et la poudre d'algues ont été associés.

Il a ainsi été montré que l'effet inhibiteur exercé par la composition sur la mobilité des *M. javanica* est réversible.

Dans les conditions expérimentales testées, la composition de l'invention a affecté de manière réversible, quelle que soit la concentration utilisée, la cinétique de sortie et le nombre de nématodes capables de sortir de la colonne de sol. Ce qui démontre l'activité nématostatique de la composition selon l'invention.

La composition a donc un effet nématostatique et peut être utilisée pour repousser les nématodes des semis et/ou des jeunes racines, le temps nécessaire à l'implantation et ou au début de croissance de la plante.

### Exemple 2 : effet nématostatique in vivo

L'effet du produit à tester sur la pression parasitaire exercée par un nématode *Meloidogyne javanica* sur tomates en sol a été testé.

Le test de réduction de la pression parasitaire *Meloidogyne javanica* sur tomate en présence de la composition à tester a consisté à évaluer le rôle potentiellement protecteur de la composition vis-à-vis du nématode endoparasite polyphage *Meloidogyne javanica* par un mécanisme d'immobilisation des nématodes juvéniles.

Les essais ont été réalisés en pots contenant du sol stérilisé et la composition apportée à la concentration à tester. Les semis de tomate (variété Roma, sensible aux nématodes) ont été réalisés directement dans les pots contenant le sol stérilisé à raison de 2 plants par pot. Quinze jours après le semis, un seul plant a été conservé et les nématodes *Meloidogyne javanica* ont été inoculés dans les pots.

Une cinétique de colonisation des racines de tomate par les nématodes a été réalisée afin de mesurer si l'effet bloquant de la composition existe et se maintient dans le temps en sol.

Le sol utilisé est un sol de texture sableuse (79 % sable; 14,1 % limons ; 6,9 % argile), avec un pH de 7,8, et un taux de matières organiques de 29,2 g/kg de sol. Il a été stérilisé par autoclavage (60 min à 105°C) avant d'être utilisé dans les expériences afin de détruire les nématodes potentiellement présents naturellement dans ce sol.

Les pots utilisés consistent en des tubes PVC de diamètre 5 cm et 15 cm de haut obturés dans leurs parties inférieures par une toile nylon de 10 µm de maille.

Ce dispositif a été choisi pour le faible risque de contamination inter-pot qu'il présente, un bon confinement des racines grâce à la maille fine de la toile et une bonne interface nématodes/système racinaire compte tenu du faible volume de sol.

### Conditions expérimentales

### Composition

La composition testée dans cette expérience était constituée d'un mélange de poudres composé de 50% en poids de formiate de calcium et de 50% en poids d'une algue sèche *Ascophyllum nodosum.* Soit une composition contenant 35% en poids d'acide formique, 15% en poids de calcium et 50% en poids de poudre d'algues.

### Modalités :

- Composition dose 1 dans le sol + nématodes: 780 ppm (mg/kg de sol sec) : 2 apports décalés de 6 jours (Fd1 N+).
- Composition dose 2 dans le sol + nématodes : 1200 ppm (mg/kg de sol sec) : 1 apport (Fd2 N+).
- Témoin eau sans nématode : A0 N0.
- Témoin eau avec nématodes (A0 N+).
- Nématicide commercial (Vydate 10G commercialisé par Dupont et contenant la substance active nématicide Oxamyl) 20 kg/ha + nématodes (Vd1 N+).
- Témoin de croissance recevant la composition sans inoculation de nématode (vérifier la non toxicité de la composition sur une plante saine): 1200 ppm (Fd2 N0).

### Nombre de répétitions /modalité : 5 répétitions

Nématodes: 288 nématodes ± 53 /pot, soit 1479 nématodes ± 272 nématodes/kg de sol sec. La suspension de nématodes contient des juvéniles synchronisés: tous âgés au plus de 48h.

Tomates Roma âgées de 15 jours au moment de l'inoculation

### Conditions :

- Température : 22°C.
- Quantité de Sol: 194,7 ± 0,3 g de sol sec par pot.
- Humidité du sol au moment de l'inoculation : 22 %.
- Arrosage : il n'y a pas eu d'arrosage pendant les 2 premiers jours, puis un arrosage modéré jusqu'au 20e jour. A partir du 20e jour, un arrosage journalier a été réalisé afin de maintenir des conditions de sol à 22 % d'humidité (détermination du volume d'eau à apporter par pesée).

### Apport des substances :

Nématicide commercial 20 kg/ha : 3 mg/pot apporté sous forme d'un mélange sol/produit à T-1, i.e. la veille de l'inoculation avec les nématodes.

Composition dose 1 (780 ppm) : apport fractionné en deux dates d'apport :
- à T-1 (i.e. la veille de l'inoculation avec les nématodes) : 152 mg de composition/pot apporté en solution (suspension de la poudre dans de l'eau).
- à T+5 : 152 mg de composition /pot apporté en solution (suspension de la poudre dans de l'eau).

Composition dose 2 (1200 ppm) : apport réalisé en une fois à T-1 (i.e. la veille de l'inoculation avec les nématodes) : 232,8 mg de composition/pot apporté en solution (suspension de la poudre dans de l'eau).

Dépôt des nématodes : 1 jour après le dépôt des substances à tester.

Durée du test : 6 semaines (approximativement un cycle de reproduction de *M. javanica*)*.*

### Mesures :

- Méthode de dénombrement des nématodes dans le sol : les nématodes ont été extraits du sol (sol du pot + sol rhizosphérique obtenu après rinçage des racines) par élutriation (séparation des nématodes des autres particules du sol par densité dans un flux d'eau) suivi d'un passage actif sur filtre de ouate. Les nématodes ont été ensuite dénombrés sous loupe binoculaire (NF ISO 23611-4).
- Méthode de dénombrement des nématodes dans les racines: les racines ont été récupérées des pots, rincées puis découpées. Les nématodes ont été extraits des racines par passage actif sur filtre de ouate pendant 5 jours. Les nématodes ont ensuite été dénombrés sous loupe binoculaire.
- Méthode de mesure d'indice de galles: L'indice de galles est défini à partir du système racinaire selon l'échelle de Zeck (1971).

### Résultats

On a observé 14 jours après inoculation par *M. javanica,* des galles sur les plants A0 N+ (Plants témoins inoculés seulement avec les nématodes) à raison d'une vingtaine de galles par système racinaire. La présence de ces galles, 14 jours après inoculation, témoignent d'une infestation rapide par les juvéniles au stade L2 de *M. javanica,* dès les premiers jours suivant l'inoculation. Aucune galle n'est détectée pour les autres modalités: A0 N0, Vd1 N+, Fd1 N+ (Témoin négatif, Nématicide et Composition à la dose de 780 ppm). Les 2 apports décalés de la composition se sont traduits par une pénétration plus tardive des nématodes liée à une immobilisation dans le sol des nématodes.

L'observation des systèmes racinaires des plants de tomates à T=42 jours après inoculation a montré l'absence de galles pour la modalité A0 N0 et la présence de galles pour les 4 modalités avec des nématodes.

Le nombre moyen de galles présentes sur le système racinaire des plants de tomate de chaque modalité figure dans le tableau 1.

**Tableau 1: Dénombrement des nématodes dans le sol et dénombrement des galles 42 jours après inoculation par M. javanica. Les valeurs correspondent aux moyennes des 5 répétitions + écart-types**

| | **Sol** | **Racine** | |
|---|---|---|---|
| **Modalités** | Nombre de nématodes | Nombre de galles | Indice de galles |
| **A0 N0** | 0 | 0 | 0 |
| **Vd1 N+** | 2.6 ± 2.2 | 37.4 ± 14.5 | 1 |
| **Fd1 N+** | 17.8 ± 8.2 | 68.8 ± 29.2 | 1 - 2 |
| **Fd2 N+** | 8.4 ± 9.4 | 65.4 ± 31.4 | 2 - 3 |
| **A0 N+** | 4.8 ± 1.6 | 115.2 ± 31.7 | 3 - 4 |

Pour les modalités Nématicide commercial et Composition Fd1 N+ à 780 ppm, les galles étaient respectivement au nombre moyen de 37,4 ± 14,5 et de 68,8 ± 29,2. Les galles étaient de petites tailles. L'indice de galles était de 1 à 2 au sein de ces modalités.

En comparaison avec le témoin A0 N+, la composition apportée en 2 traitements (Fd1 N+) a montré un nombre plus important de nématodes restant dans le sol et un nombre inférieur de nématodes ayant infecté les racines.

En présence de la composition selon l'invention, un décalage de 14 jours dans l'apparition des galles sur les racines de tomates a été observé par rapport au témoin infesté. Un nombre de galles inférieur de 40% a aussi été observé sur les plantes traitées avec la composition par rapport au témoin infesté.

### Exemple 3 : effet nématostatique in vitro de différents acides carboxyliques

### Méthode permettant de tester la mobilité de Meloidogyne javanica en microcosme de sol

La méthode est identique à celle décrite dans l'Exemple 1.

### Conditions expérimentales

### 1) Modalités :

| **Test 1 : sans extrait d'algue** | | | | | | |
|---|---|---|---|---|---|---|
| Modalités | **F200** | **ACA** | **FNA** | **AF** | **ACT** | **FP** |
| Produit ppm (mg/kg de sol sec) | F200 | ACA | FNA | AF | ACT | Fluopyram |
| | 780 | 780 | 780 | 780 | 780 | 24 |

| **Test 2 : avec extrait d'algue** | | | | | | |
|---|---|---|---|---|---|---|
| Modalités | **F200 + RD2** | **ACA + RD2** | **FNA + RD2** | **AF + RD2** | **ACT + RD2** | **RD2** |
| Produit ppm | F200 | ACA | FNA | AF | ACT | |
| (mg/kg de sol sec) | 780 | 780 | 780 | 780 | 780 | |
| RD2 ppm (mg/kg de sol sec) | 780 | 780 | 780 | 780 | 780 | 780 |

### Test 1 : sans extrait d'algue

- « ppm » correspond à « mg/kg de sol ».
- Formiate de Calcium (F200) à la concentration dans le sol exprimée en mg/kg de sol: 780 mg/kg de sol (ou ppm).
- Acétate de Calcium (ACA) à la concentration dans le sol exprimée en mg/kg de sol: 780 mg/kg de sol (ou ppm).
- Formiate de sodium (FNA) à la concentration dans le sol exprimée en mg/kg de sol: 780 mg/kg de sol (ou ppm).
- Acide acétique (ACT) à la concentration dans le sol exprimée en mg/kg de sol: 780 mg/kg de sol (ou ppm).
- Fluopyram (FP) - Témoin positif : nématicide commercial Velum prime,
- Témoin négatif H₂O.

### Test 2 : avec extrait d'algue (mêmes modalités que dans test 1 + poudre d'algues RD2)

- Poudre d'algues (Ascophyllum nodosum) RD2 à la concentration dans le sol exprimée en mg/kg de sol: 780 mg/kg de sol (ou ppm), composition qui n'est pas selon l'invention.
- Composition de Formiate de Calcium (F200) à 780 mg/kg de sol (ou ppm) + poudre d'algues RD2 à 780 mg/kg de sol.
- Composition d'Acétate de Calcium (ACA) à 780 mg/kg de sol (ou ppm) + poudre d'algues RD2 à 780 mg/kg de sol, composition qui n'est pas selon l'invention.
- Composition de Formiate de Sodium (FNA) à 780 mg/kg de sol (ou ppm) + poudre d'algues RD2 à 780 mg/kg de sol.
- Composition d'Acide acétique(ACT) à 780 mg/kg de sol (ou ppm) + poudre d'algues RD2 à 780 mg/kg de sol, composition qui n'est pas selon l'invention.
- Témoin négatif H₂O.

2) *Nombre de répétition*/*modalité* : 5 répétitions.
3) *Nématodes* : 353 nématodes ± 52 /microcosme (i.e. sol + nématodes + produit testé).
4) *Conditions* :
   - Température (21°C).
   - Le sol qui a été utilisé est un sol de texture sableuse (79 % sable; 14,1 % limons; 6,9 % argile), avec un pH de 7,8 et un taux de matière organique de 29,2 g/kg. Le sol a été stérilisé par autoclavage (60 min à 105°C) avant d'être utilisé.
   - Quantité de sol : 4,04 g +/-0,03 g de sol par microcosme.
   - Hauteur de colonne de sol : 2 cm.
   - Humidité du sol 22,5 % +/-0,2%.
   - Dépôt des nématodes 1 h avant le dépôt du produit à tester.
   - Durée d'incubation avec le produit à tester : 5h.
   - Passage actif sur eau pour tester la réversibilité de l'effet sur 6 jours (cinétique sur 144h).

### Résultats

Les résultats sont présentés aux Figures 4 à 7.

En présence d'eau (contrôle négatif) dans les conditions expérimentales testées, 100% des nématodes sont sortis du microcosme du sol dans les 20 premières heures.

En présence de Fluopyram (contrôle positif) dans les conditions expérimentales testées, aucun nématode n'est sorti du microcosme du sol au bout de 160 heures.

Dans chacune des conditions expérimentales testées, l'association de l'extrait d'algue et de l'acide carboxylique a permis d'obtenir un effet nématostatique synergique comparé à l'extrait d'algue seul ou à l'acide carboxylique seul.

) L'effet nématostatique a été réversible puisqu'au moins 40% des nématodes ont retrouvé leur mobilité après 160 heures.

Les compositions testées ont donc un effet nématostatique et peuvent être utilisée pour repousser les nématodes des semis et/ou des jeunes racines, le temps nécessaire à l'implantation et/ou au début de croissance de la plante.

## Revendications

1. Composition nématostatique comprenant (i) une algue marine sous forme de poudre et (ii) de l'acide formique ;
dans laquelle l'algue marine sous forme de poudre est obtenue en séchant l'algue marine puis en la broyant jusqu'à obtenir une poudre ; et
dans laquelle l'algue marine est *Ascophyllum nodosum.*

2. Composition selon larevendication 1, **caractérisée en ce que** l'acide formique est sous forme d'un sel, de préférence le sel d'acide formique est choisi parmi un sel de métal alcalin, tel que le sodium, le potassium ou le lithium ; un sel de métal alcalino-terreux, tel que le calcium ou le magnésium ; un sel d'un métal de transition, tel que le manganèse, le cuivre, le zinc ou le fer ; un sel d'ammonium ; un sel de phosphonium ou un sel de sulfonium.

3. Composition selon l'une quelconque des revendications 1 ou 2, **caractérisée en ce que** l'acide formique est sous forme sèche, de préférence sous forme de poudre.

4. Composition selon l'une quelconque des revendications 1 à 3, comprenant en outre au moins un fertilisant, de préférence choisi parmi un amendement ou un engrais.

5. Composition selon la revendication 4, **caractérisée en ce que** le fertilisant est sous forme solide, de préférence sous forme de poudre ou sous forme de granulés.

6. Composition selon l'une quelconque des revendications 1 à 5, **caractérisée en ce que** la teneur en acide formique va de 30 à 90% en poids et la teneur en algue va de 10 à 70% en poids, rapporté au poids total de la composition.

7. Utilisation d'une composition selon l'une quelconque des revendications 1 à 6 comme composition nématostatique vis-à-vis des nématodes.

8. Procédé de traitement d'un sol destiné à favoriser la croissance d'une plante en réduisant l'accès des nématodes aux racines de ladite plante, **caractérisé en ce qu'**il comprend l'apport au sol d'une quantité efficace d'une composition selon l'une quelconque des revendications 1 à 6,
de préférence la plante est choisie parmi la betterave, le maïs, le blé dur, le colza, la carotte, la pomme de terre, les solanacées, les cucurbitacées, la laitue ou la vigne.

9. Utilisation selon la revendication 7 ou procédé selon la revendication 8, **caractérisé en ce que** la composition est appliquée au sol au stade pré-semis, pré-émergence de la plante ou post-émergence de la plante, de préférence la plante est choisie parmi la betterave, le maïs, le blé dur, le colza, la carotte, la pomme de terre, les solanacées, les cucurbitacées, la laitue ou la vigne.

10. Utilisation selon l'une quelconque des revendications 7 et 9, ou procédé selon l'une quelconque des revendications 8 et 9, dans lequel la composition est apportée au sol en une quantité allant de 1 à 50 kg/ha, de préférence allant de 2 à 30 kg/ha, de préférence environ 10 kg/ha.

11. Utilisation selon l'une quelconque des revendications 7, 9-10, ou procédé selon l'une quelconque des revendications 8 à 10, **caractérisé en ce que** les nématodes sont des nématodes pathogènes, de préférence choisis parmi les genres *Achlysiella, Anguina, Aphasmatylenchus, Aphelenchoides, Belonolaimus, Bursaphelenchus, Criconemella, Ditylenchus, Helicotylenchus, Hemicriconemoides, Heterodera, Hirschmanniella, Hoplolaimus, Longidorus, Meloidogyne, Nacobbus, Paralongidorus, Pratylenchus, Radopholus, Rotylenchulus, Rotylenchus, Scutellonema, Trichodorus, Trophotylenchulus, Tylenchorhynchus, Tylenchulus et Xiphinema.*

## Patentansprüche

1. Nematostatische Zusammensetzung, umfassend (i) eine Meeresalge in Pulverform und (ii) Ameisensäure;
wobei die Meeresalge in Pulverform durch Trocknen der Meeresalge und anschließendes Vermahlen, bis ein Pulver erhalten wird, erzielt wird; und
wobei die Meeresalge *Ascophyllum nodosum* ist.

2. Zusammensetzung nach Anspruch 1, **dadurch gekennzeichnet, dass** die Ameisensäure in Form eines Salzes vorliegt, wobei das Säuresalz vorzugsweise ausgewählt ist aus einem Alkalimetallsalz wie Natrium, Kalium oder Lithium; einem Erdalkalimetallsalz wie Calcium oder Magnesium; einem Übergangsmetallsalz wie Mangan, Kupfer, Zink oder Eisen; einem Ammoniumsalz; einem Phosphoniumsalz oder einem Sulfoniumsalz,

3. Zusammensetzung nach einem der Ansprüche 1 oder 2, **dadurch gekennzeichnet, dass** die Ameisensäure in trockener Form, vorzugsweise in Pulverform, vorliegt.

4. Zusammensetzung nach einem der Ansprüche 1 bis 3, außerdem umfassend mindestens ein Düngemittel, vorzugsweise ausgewählt aus einem Bodenverbesserungsmittel oder einem Dünger.

5. Zusammensetzung nach Anspruch 4, **dadurch gekennzeichnet, dass** das Düngemittel in fester Form vorliegt, vorzugsweise in Pulverform oder in Granulatform.

6. Zusammensetzung nach einem der Ansprüche 1 bis 5, **dadurch gekennzeichnet, dass** der Gehalt an Ameisensäure von 30 bis 90 Gew.% und der Gehalt von Algen von 10 bis 70 Gew.%, bezogen auf das Gesamtgewicht der Zusammensetzung, beträgt.

7. Verwendung einer Zusammensetzung nach einem der Ansprüche 1 bis 6 als nematostatische Zusammensetzung gegen Nematoden.

8. Bodenbehandlungsverfahren zur Förderung des Wachstums einer Pflanze durch Verringerung des Zugangs von Nematoden auf die Wurzeln der Pflanze, **dadurch gekennzeichnet, dass** es das Aufbringen einer wirksamen Menge einer Zusammensetzung nach einem der Ansprüche 1 bis 6 auf den Boden umfasst,
vorzugsweise ist die Pflanze ausgewählt aus Rote Bete, Mais, Hartweizen, Raps, Karotte, Kartoffel, Nachtschattengewächsen, Kürbisgewächsen, Salat oder Weinrebe.

9. Verwendung nach Anspruch 7 oder Verfahren nach Anspruch 8, **dadurch gekennzeichnet, dass** die Zusammensetzung vor der Aussaat, vor dem Aufgang der Pflanze oder nach dem Aufgang der Pflanze auf den Boden aufgebracht wird, vorzugsweise ist die Pflanze ausgewählt aus Rote Bete, Mais, Hartweizen, Raps, Karotte, Kartoffel, Nachtschattengewächsen, Kürbisgewächsen, Salat oder Weinrebe.

10. Verwendung nach einem der Ansprüche 7 und 9 oder Verfahren nach einem der Ansprüche 8 und 9, wobei die Zusammensetzung in einer Menge von 1 bis 50 kg/ha, vorzugsweise von 2 bis 30 kg/ha, vorzugsweise etwa 10 kg/ha auf den Boden aufgebracht wird.

11. Verwendung nach einem der Ansprüche 7, 9-10 oder Verfahren nach einem der Ansprüche 8 bis 10, **dadurch gekennzeichnet, dass** es sich bei den Nematoden um pathogene Nematoden handelt, vorzugsweise ausgewählt aus den Gattungen *Achlysiella, Anguina, Aphasmatylenchus, Aphelenchoides, Belonolairnus, Bursaphelenchus, Criconemella, Ditylenchus, Helicotylenchus, Hemicriconemoides, Heterodera, Hirschmanniella, Hoplolaimus, Longidorus, Meloidogyne, Nacobbus, Paralongidorus, Pratylenchus, Radopholus, Rotylenchulus, Rotylenchus, Scutellonema, Trichodorus, Trophotylenchulus, Tylenchorhynchus, Tylenchulus* und *Xiphinema.*

## Claims

1. A nematostatic composition comprising (i) a marine alga in powder form and (ii) formic acid;
wherein the marine alga in powder form is obtained by drying the marine alga and then grinding it until a powder is obtained; and
wherein the marine alga is *Ascophyllum nodosum.*

2. The composition as claimed in claim 1, wherein the formic acid is in the form of a salt, preferably the salt of formic acid is selected from a salt of an alkali metal, such as sodium, potassium or lithium; a salt of an alkaline earth metal, such as calcium or magnesium; a salt of a transition metal, such as manganese, copper, zinc or iron; an ammonium salt; a phosphonium salt or a sulfonium salt.

3. The composition as claimed in claim 1 or 2, **characterized in that** the formic acid is in dry form, preferably in powder form.

4. The composition as claimed in any one of claim 1 to 3, further comprising at least one fertilizer, preferably selected from an amendment or a fertilizer.

5. The composition as claimed in claim 4, wherein the fertilizer is in solid form, preferably in powder form or in the form of granules.

6. The composition as claimed in any one of claims 1 to 5, wherein the content of carboxylic acid is in the range from 30 to 90 wt% and the content of alga is in the range from 10 to 70 wt%, relative to the total weight of the composition.

7. A use of a composition as claimed in any one of claims 1 to 6 as a nematostatic composition against nematodes.

8. A method of soil treatment intended to promote plant growth by reducing nematodes' access to the roots of said plant, wherein it comprises supplying the soil with an effective amount of a composition as claimed in any one of claims 1 to 6, preferably the plant is selected from beet, maize, hard wheat, colza, carrot, potato, the Solanaceae, the Cucurbitaceae, lettuce or grapevine.

9. The use as claimed in claim 7 or the method as claimed in claim 8, wherein the composition is applied to the soil at the pre-sowing stage, pre-emergence of the plant or post-emergence of the plant, preferably the plant is selected from beet, maize, hard wheat, colza, carrot, potato, the Solanaceae, the Cucurbitaceae, lettuce or grapevine.

10. The use as claimed in any one of claims 7 and 9, or the method as claimed in any one of claims 8 and 9, in which the composition is supplied to the soil in an amount from 1 to 50 kg/ha, preferably from 2 to 30 kg/ha, preferably about 10 kg/ha.

11. The use as claimed in any one of claims 7, 9-10, or the method as claimed in any one of claims 8 to 10, wherein the nematodes are pathogenic nematodes, preferably selected from the genera *Achlysiella, Anguina, Aphasmatylenchus, Aphelenchoides, Belonolaimus, Bursaphelenchus, Criconemella, Ditylenchus, Helicotylenchus, Hemicriconemoides, Heterodera, Hirschmanniella, Hoplolaimus, Longidorus, Meloidogyne, Nacobbus, Paralongidorus, Pratylenchus, Radopholus, Rotylenchulus, Rotylenchus, Scutellonema, Trichodorus, Trophotylenchulus, Tylenchorhynchus, Tylenchulus* and *Xiphinema.*
